# EUROPEAN PATENT APPLICATION

(11) **EP 4 707 102 A1**
(43) Date of publication of application: **11.03.2026**
(21) Application number: 25192587.1
(22) Date of filing: 29.07.2025
(51) Int. Cl.: B60W 30/09, B60W 30/095, B60W 30/12, B60W 50/14, B60W 50/00, B60Q 1/50

(54) **CONTROL DEVICE FOR VEHICLE**

(30) Priority: 06.09.2024 JP 2024153906
(71) Applicant: Suzuki Motor Corporation, Shizuoka 432-8611 (JP)
(72) Inventor: AOSHIMA, Hidemichi, HAMAMATSU-SHI, 432-8611 (JP)
(74) Representative: Plasseraud IP

(57) **Abstract**

[Problem to be Solved]

To provide a control device for vehicle capable of precisely determining the state of another vehicle veering to the vehicle's own lane and approaching the vehicle to appropriately assist a driving operation of the vehicle.

[Solution]

A control device 30 for a vehicle 1 includes: a pattern recognition unit 34 configured to recognize a display pattern P projected by another vehicle 2, on a road surface of an area in front of the vehicle 1; a veering determination unit 35 configured to predict or determine that the other vehicle 2 veers from a second lane L2 adjacent to a first lane L1 in which the vehicle 1 is traveling, into the first lane L1 based on the display pattern P recognized by the pattern recognition unit 34; and an avoidance assistance control unit 36 configured to, when it is predicted or determined by the veering determination unit 35 that the other vehicle 2 veers from the second lane L2 into the first lane L1, perform avoidance assistance control for avoiding collision with the other vehicle 2.

## Description

### [Technical Field]

The present invention relates to control devices for vehicles.

### [Background Art]

There are known various driving assistance techniques for assisting a driving operation of a vehicle by a driver. As the driving assistance techniques, there are, for example, lane keeping control for assisting a vehicle to travel near the center of a lane and emergency avoidance control for avoiding collision between a vehicle and an obstacle. For example, Patent Literature 1 discloses a vehicle control device which, when it is determined that there is a likelihood that a vehicle will veer from a lane by execution of steering avoidance control for an obstacle such as an oncoming vehicle, sets a target travel path that is offset to a side to which the veering is likely to occur, relative to the center of the lane.

### [Citation List]

### [Patent Literature]

[Patent Literature 1] JP 2019-077292 A

### [Summary of Invention]

### [Problem to be Solved by the Invention]

In the device of Patent Literature 1 described above, when there is a likelihood of collision between the vehicle and another vehicle, steering avoidance control is executed to avoid the collision. Here, whether there is a likelihood that the vehicle (the ego vehicle) and another vehicle will collide with each other is generally determined based on a result of detection of the other vehicle by a detection device equipped on the vehicle, such as a camera or a sensor, in addition to the vehicle state and driving operation state of the vehicle. When the other vehicle is traveling on an oncoming lane, a situation in which the other vehicle is veering into the lane in which the vehicle is, and the other vehicle is approaching the vehicle indicates that there is a probability of collision between the vehicle and the other vehicle. However, although the detection device can detect the relative speed and movement of the other vehicle seen from the vehicle, and the positional relationship of the other vehicle relative to a demarcation line, the driving operation state of the other vehicle, such as the amount of steering operation, cannot be directly detected. Thus, it is difficult to precisely determine the state of the other vehicle by the detection device of the vehicle, and it is desired to accurately grasp whether the other vehicle veers into the lane in which the vehicle is and appropriately assist a driving operation of the vehicle.

The present invention has been made in view of the above situation, and an object thereof is to provide a control device for a vehicle capable of precisely determining the state of another vehicle veering into the lane in which the vehicle is in and approaching the vehicle to appropriately assist a driving operation of the vehicle.

### [Means for Solving the Problem]

According to one aspect of the present invention, a control device for a vehicle includes: a pattern recognition unit configured to recognize a display pattern projected by another vehicle, on a road surface of an area in front of the vehicle; a veering determination unit configured to predict or determines that the other vehicle is veering from a second lane adjacent to a first lane in which the vehicle is traveling, into the first lane, based on the display pattern recognized by the pattern recognition unit; and an avoidance assistance control unit configured to, when it is predicted or determined by the veering determination unit that the other vehicle is veering from the second lane to the first lane, perform avoidance assistance control for avoiding collision with the other vehicle.

### [Advantageous Effect of Invention]

The control device for a vehicle according to the present invention can precisely determine the state of another vehicle veering into the lane in which the vehicle is and approaching the vehicle to appropriately assist a driving operation of the vehicle.

### [Brief Description of Drawings]

[Figure 1] Figure 1 is a block diagram showing a schematic configuration of a control system for a vehicle in one embodiment of the present invention.
[Figure 2] Figure 2 is a diagram for illustrating the concept of avoidance assistance control in the one embodiment.
[Figure 3] Figure 3 is a flowchart showing a flow of the avoidance assistance control in the one embodiment.

### [Mode for Carrying Out the Invention]

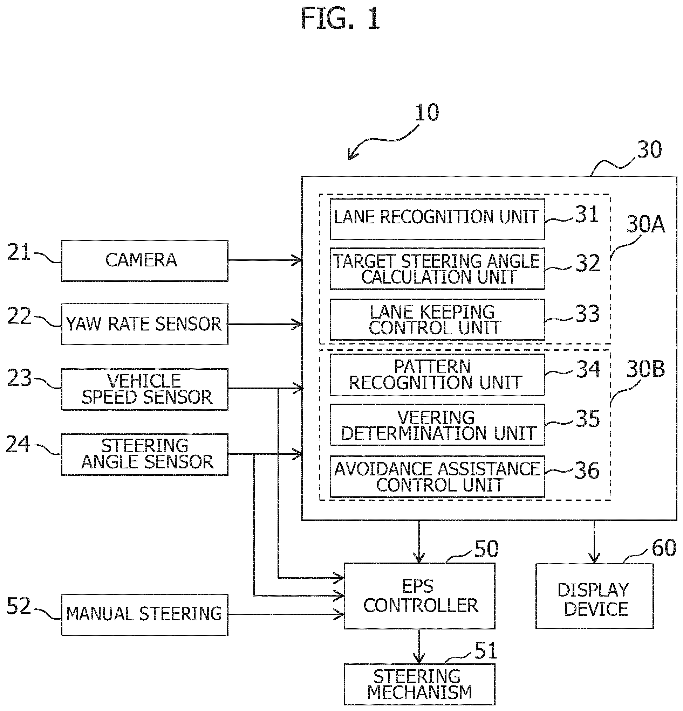

A control device for vehicle according to one embodiment of the present invention will be described in detail below with reference to the drawings. Figure 1 is a block diagram showing a schematic configuration of a control system 10 for a vehicle that includes a control device in the present embodiment. The control device for vehicle in the present embodiment is configured to assist a driver's driving operation, by utilizing information of a display pattern projected on a road surface to assist the driver's driving operation.

As shown in Figure 1, the control system 10 for a vehicle (ego vehicle) includes a camera 21 which is front detection (sensing) means for detecting an area in front of the vehicle, a yaw rate sensor 22 that detects a yaw rate γ of the vehicle, a vehicle speed sensor 23 that detects a speed of the vehicle (vehicle speed) V, and a steering angle sensor 24 that detects a steering angle (front wheel steering angle) δ of the vehicle, and the like. The control system 10 for the vehicle further includes a control device 30, an EPS (electric power steering) controller 50, a display device 60, and the like.

The camera 21 is configured to capture images of the area in front of the vehicle using an image sensor and input image data to the control device 30. The camera 21 is a detection device capable of detecting positions of demarcation lines (lane marking lines) on a road, which demarcate the vehicle's own lane in which the vehicle is traveling and an adjacent lane, and presence of and a relative distance to an obstacle near the vehicle such as another vehicle or a person. The area in front of the vehicle, the images of which are captured up by the camera 21, is an area that includes the adjacent lane in which another vehicle is traveling in addition to the vehicle's own lane in front of the vehicle.

Signals of the yaw rate γ detected by the yaw rate sensor 22, the vehicle speed V detected by the vehicle speed sensor 23, and the steering angle δ detected by the steering angle sensor 24 are input to the control device 30. The signals of the vehicle speed V detected by the vehicle speed sensor 23 and the steering angle δ detected by the steering angle sensor 24 are also input to the EPS controller 50.

The control device 30 is configured, for example, with a computer including a ROM that stores programs and data, a CPU that performs arithmetic processing, a RAM that stores dynamic data and arithmetic processing results, an input/output interface, and the like. The control device 30 is configured to execute lane keeping control for the vehicle to keep travelling within a lane near the center of the lane. A system that executes the lane keeping control is also called a lane keeping assistance system (LKAS). The control device 30 is further configured to, while the lane keeping control is being executed, perform avoidance assistance control for avoiding collision with an obstacle around the vehicle, especially another vehicle that veers from an oncoming lane into the vehicle's own lane.

Therefore, the control device 30 is configured to execute functions of a lane recognition unit 31, a target steering angle calculation unit 32, a lane keeping control unit 33, a pattern recognition unit 34, a veering determination unit 35, and an avoidance assistance control unit 36 to control the whole control system 10 for the vehicle. In the control device 30, the lane recognition unit 31, the target steering angle calculation unit 32, and the lane keeping control unit 33 constitute a lane keeping assistance unit 30A; and the pattern recognition unit 34, the veering determination unit 35, and the avoidance assistance control unit 36 constitute an avoidance assistance unit 30B. The configurations of the lane keeping assistance unit 30A and the avoidance assistance unit 30B will be described later.

The EPS controller 50 is configured, for example, with a computer including a ROM that stores programs and data, a CPU that performs arithmetic processing, a RAM that stores dynamic data and arithmetic processing results, an input/output interface, and the like. The EPS controller 50 is configured to control a steering mechanism 51 based on a steering angle command input from the lane keeping assistance unit 30A or the avoidance assistance unit 30B or a steering angle command according to manual steering 52 of a steering wheel.

Since steering reaction force changes according to vehicle speed, the EPS controller 50 refers to a steering angle/steering torque map for each vehicle speed, which is stored in a memory (not shown), to acquire steering torque based on a steering angle command, and outputs a torque command to the steering mechanism 51. The steering mechanism 51 drives an actuator (an EPS motor) (not shown) according to the torque command. Thereby, the front wheel steering angle δ is controlled such that the vehicle travels following a target path, and steering control is executed.

The display device 60 is configured to perform display according to a command from the control device 30 and provide information for the driver of the vehicle. The display device 60 has, for example, a liquid crystal display, an indicator light, and the like arranged on an instrument panel at the front of the vehicle, and can visually provide information for the driver. When the lane keeping control described above is being executed, information showing that the lane keeping control is being executed is displayed on the display device 60. When the avoidance assistance control is being executed, information showing that the avoidance assistance control is being executed is displayed. The display device 60 can be configured, for example, as the display of a navigation system (not shown). As means for providing the information, a configuration may be made to aurally provide the information for the driver, for example, using a speaker in addition to, or instead of, the display device 60.

Next, the configuration of the lane keeping assistance unit 30A will be described. The lane recognition unit 31 is configured to recognize a lane (a travel lane) in which the vehicle is traveling. For example, the lane recognition unit 31 performs image processing based on image data of the area in front input from the camera 21 and recognizes left and right demarcation lines (white lines) defining the lane in which the vehicle is traveling. The demarcation lines include a demarcation line between the vehicle's own lane and an adjacent lane and a demarcation line on the side end of the vehicle's own lane. Furthermore, the lane recognition unit 31 calculates the width of the lane and the centerline of the lane that runs on the central position between the left and right demarcation lines, from the positions of the left and right demarcation lines, and calculates the curvature radius or the curvature (= the reciprocal of the curvature radius) of the road based on the centerline of the lane.

The target steering angle calculation unit 32 is configured to calculate a target steering angle θa for the vehicle to follow the target path within the lane. For example, the target steering angle calculation unit 32 sets the centerline through the center of the lane, which has been calculated by the lane recognition unit 31, as the target path, and calculates the position and orientation of the vehicle relative to the centerline of the lane. The position of the vehicle is, for example, a distance from the centerline of the lane to the center of gravity of the vehicle in the vehicle width direction (lateral displacement) y; and the orientation of the vehicle is, for example, an angle formed between the tangent direction of the centerline of the lane and the central axis of the vehicle in the front-rear direction (a yaw angle) θy. Note that the yaw angle θy can also be calculated by integrating the yaw rate γ input from the yaw rate sensor 22. The target steering angle calculation unit 32 calculates the target steering angle θa for following the target path based on the position and orientation of the vehicle.

The lane keeping control unit 33 executes the lane keeping control. Specifically, the lane keeping control unit 33 is configured to perform steering control based on the target steering angle θa in order to keep the vehicle traveling within the lane. For example, the lane keeping control unit 33 estimates the orientation and lateral displacement of the vehicle after Δt seconds, from the position and movement characteristics of the vehicle, that is, a relationship between the yaw rate γ and lateral acceleration rate (d²y/dt²) caused by vehicle movement, by the front wheel steering angle δ that occurs when steering torque T is given to the steering mechanism 51 during travel at the vehicle speed V. The lane keeping control unit 33 calculates such a steering angle command that the lateral displacement becomes yt after Δt seconds and outputs the steering angle command to the EPS controller 50.

Thus, the control device 30 according to the present embodiment is configured to execute the lane keeping control for assisting a driving operation of the vehicle by the driver such that the vehicle keeps traveling within a lane and near the center of the lane, by the lane keeping assistance unit 30A. The control device 30 is further configured to execute the avoidance assistance control for, in a situation in which another vehicle veers into the vehicle's own lane from an oncoming lane while the lane keeping control is being executed, avoiding collision with the other vehicle, by the avoidance assistance unit 30B.

Here, whether or not there is a likelihood that the other vehicle traveling in the oncoming lane veers into the vehicle's own lane and collides with the vehicle is generally determined based on a result of detection of the other vehicle by a detection device such as a camera and a sensor equipped on the vehicle in addition to the vehicle state and driving operation state of the vehicle. It can be said that a situation in which the other vehicle is veering from the adjacent lane and is approaching the vehicle has a likelihood of collision between the vehicle and the other vehicle.

As described above, by capturing images of the area in front of the vehicle by a detection device for detecting another vehicle, for example, the camera 21, it is possible to detect a relative movement speed and a relative movement direction of the other vehicle seen from the vehicle, and a positional relationship of the other vehicle relative to demarcation lines. Therefore, it is possible to, by detecting a movement direction of the other vehicle up to the current point of time and further predicting a future travel direction, based on the image data picked up by the camera 21, determine whether or not there is a probability that the other vehicle veers into the vehicle's own lane and collides with the vehicle.

The camera 21 of the vehicle, however, cannot directly detect the vehicle state and driving operation state of the other vehicle. For example, it is not possible to detect the amount of steering operation of the other vehicle from image data picked up by the camera 21. That is, with the camera 21, the vehicle cannot accurately determine in which direction the other vehicle is going to move, based on the actual amount of steering operation of the other vehicle, and it is difficult to precisely determine whether the other vehicle will veer from the adjacent lane into the vehicle's own lane.

There is proposed driving assistance projection in which a warning is projected on a road surface using headlights with variable light distribution equipped on a vehicle in order to assist a driver's driving operation. The driving assistance projection is a function of projecting display patterns on a road surface as a driving assistance projection, with the display patterns indicating particular warnings, such as a collision risk warning and a lane keeping assistance warning, for assisting a driver driving operation. For example, a case is assumed in which the driving assistance projection function is configured to, when it is predicted or determined that the vehicle veers from a lane, that is, moves outside the lane, project the display pattern indicating the lane keeping assistance warning on a road surface. **In** this case, by projecting the display pattern indicating the lane keeping assistance warning on a road surface in front of the vehicle, it is possible to warn the driver of the vehicle which is veering from the lane and urge the driver to perform a driving operation to keep travel within the lane.

The display pattern is projected on the road surface when it is comprehensively determined that the vehicle veers from its lane after predicting the travel direction of the vehicle, based on a result of actual detection of the positional relationship of the vehicle relative to the demarcation lines of the lane, the amount of steering operation of the vehicle, and the like. That is, it can be said that a display pattern projected on a road surface as a driving assistance projection reflects the actual driving operation state of a vehicle equipped with the driving assistance projection function. Therefore, in the present embodiment, when another vehicle traveling on an adjacent lane has the driving assistance projection function, and a display pattern of driving assistance projection is projected on a road surface in front of the other vehicle, the display pattern of the driving assistance projection projected by the other vehicle is utilized for the avoidance assistance control of the vehicle.

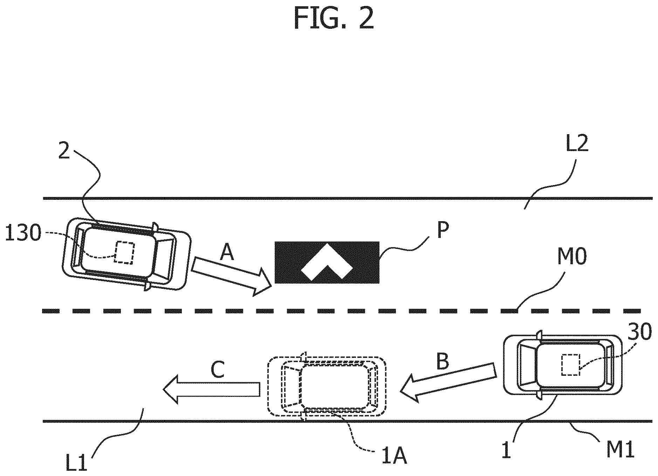

Specifically, in the present embodiment, the display pattern of the driving assistance projection projected by the other vehicle is recognized, and then, the avoidance assistance control by the avoidance assistance unit 30B is executed. The configuration of and the avoidance assistance control by the avoidance assistance unit 30B will be described below with reference to Figure 2. Figure 2 is a diagram for illustrating an overview of the avoidance assistance control in the present embodiment. In Figure 2, a vehicle 1 to which the control device for vehicle according to the present embodiment is applied is traveling on its own lane (a first lane) L1. Another vehicle 2 is an oncoming vehicle that is moving in a direction opposite to the travel direction of the vehicle 1 and is traveling on an adjacent lane (a second lane) L2 adjacent to its own lane. The lane L1 and the adjacent lane L2 are separated by a demarcation line M0, and the lane L1 is demarcated by the demarcation line M0 and a demarcation line M1 on the side end.

The pattern recognition unit 34 is configured to recognize a display pattern P projected by a control device 130 of the other vehicle 2, on the road surface in the area in front of the vehicle 1. Specifically, the pattern recognition unit 34 performs image processing based on image data of the area in front of the vehicle 1 input from the camera 21, and recognizes the display pattern P of driving assistance projection projected on the road surface of the adjacent lane L2 in which the other vehicle 2 is traveling.

The pattern recognition unit 34 determines whether an image corresponding to a display pattern of a driving assistance projection is included in the image data of the area in front of the vehicle 1, and if the image corresponding to the display pattern is included, determines whether the image corresponds to the lane keeping assistance warning. The pattern recognition unit 34 can determine whether or not the display pattern P projected on the road surface indicates the lane keeping assistance warning, for example, by using pattern matching. The display pattern P shown in Figure 2 is a symbol that can be used as the lane keeping assistance warning, and shows that there is a likelihood that the other vehicle 2 traveling on the adjacent lane L2 will veer into the lane L1 as shown by arrow A.

The veering determination unit 35 is configured to predict whether the other vehicle 2 will veer from the adjacent lane L2, adjacent to the lane L1 in which the vehicle 1 is traveling, to the lane L1, based on the display pattern P recognized by the pattern recognition unit 34. In a case in which it is determined that the other vehicle 2 is traveling within the adjacent lane L2 based on the positional relationship of the other vehicle 2 relative to the demarcation line M0 recognized by the lane recognition unit 31, the display pattern P shown in Figure 2 is recognized by the pattern recognition unit 34, and then the veering determination unit 35 predicts whether the other vehicle 2 will veer into the lane L1.

Note that the veering determination unit 35 may determine that the other vehicle 2 has actually veered into the lane L1. In this case, when it is detected that, in a state in which the display pattern P has been recognized by the pattern recognition unit 34, the other vehicle 2 has deviated or veered from the adjacent lane L2, from the positional relationship of the other vehicle 2 relative to the demarcation line M0, the veering determination unit 35 determined that the other vehicle 2 has veered into the lane L1.

The veering determination unit 35 may be further configured to determine the probability of veering of the other vehicle 2. The veering determination unit 35 determines the probability of veering of the other vehicle 2 into the lane L1, for example, based on the vehicle speed of the other vehicle 2 and the positional relationship of the other vehicle 2 relative to the demarcation line M0. The veering determination unit 35 determines that the probability of veering is higher as the vehicle speed of the other vehicle 2 is higher, as the other vehicle 2 is closer to the demarcation line M0, or as the orientation (the travel direction) of the other vehicle 2 is directed closer to the demarcation line M0.

The avoidance assistance control unit 36 is configured to, when it is predicted or determined by the veering determination unit 35 that the other vehicle 2 veers to the lane L1, perform the avoidance assistance control for avoiding collision with the other vehicle 2. As the avoidance assistance control, there are, for example, a method of avoiding the collision by steering control and a method of avoiding the collision by brake control. In the present embodiment, the avoidance assistance control unit 36 executes the steering control as the avoidance assistance control.

Specifically, the avoidance assistance control unit 36 offsets a target path of the lane keeping control that is being executed by the lane keeping assistance unit 30A, in a direction away from the adjacent lane L2 as shown by arrow B and arrow C, and executes steering control so that the vehicle 1 travels, following the target path that has been offset. The target path of the lane keeping control is set to be through the center of the lane L1. The target path that has been offset (an offset path) is set such that it is away from the adjacent lane L2 and the vehicle 1 is still able to travel within the lane L1. In Figure 2, an example of the vehicle 1 that travels along the offset path is shown as vehicle 1A.

Therefore, the avoidance assistance control unit 36 determines whether or not a space for offsetting the target path (an offset-enabling area) is available within the lane L1 based on image data of the area in front of the vehicle 1 input from the camera 21. In a case in which no space for causing the travel position of the vehicle 1 to be safely offset in the vehicle width direction is available within the lane L1, for example, in a case in which the width of the lane L1 in front of the vehicle 1 is narrow or in a case in which an obstacle such as a parked vehicle is present on the lane L1 in front of the vehicle 1, the avoidance assistance control unit 36 determines that no offset-enabling area is present. When an obstacle is not present on the lane L1 in front of the vehicle 1, and there is sufficient space within the lane L1 even if the travel position of the vehicle 1 in the vehicle width direction is offset, the avoidance assistance control unit 36 determines that the offset-enabling area is present.

When it is determined that the offset-enabling area is present within the lane L1, the avoidance assistance control unit 36 sets an offset path which is the target path of the lane keeping control offset in the direction away from the adjacent lane L2. The offset path is designed such that the entire body of the vehicle 1 is included within the lane L1 without the vehicle 1 going beyond the demarcation line M1, in consideration of the vehicle width of the vehicle 1. In this case, the avoidance assistance control unit 36 calculates a steering angle command for following the offset path and outputs the steering angle command to the EPS controller 50. On the other hand, when it is determined that the offset-enabling area is not present within the lane L1, the avoidance assistance control unit 36 does not set the offset path. In this case, the avoidance assistance control by the avoidance assistance unit 30B is not executed, and the driver manually performs a driving operation such as a steering operation and/or a braking operation to avoid collision with the other vehicle 2.

Note that the avoidance assistance control unit 36 may be configured to, when veering of the other vehicle 2 is predicted by the veering determination unit 35, adjust the timing of starting the avoidance assistance control according to the probability of the veering. Specifically, the avoidance assistance control unit 36 delays the timing of starting the offset of the target path described above later as the probability of veering of the other vehicle 2 to the lane L1 is lower. For example, when it is determined by the veering determination unit 35 that the other vehicle 2 has veered into the lane L1, the avoidance assistance control unit 36 immediately offsets the target path. In comparison, when it is predicted by the veering determination unit 35 that the other vehicle 2 will veer into the lane L1, the avoidance assistance control unit 36 makes a setting such that time until execution of the offset of the target path after the prediction of the veering is longer as the probability of the veering is lower.

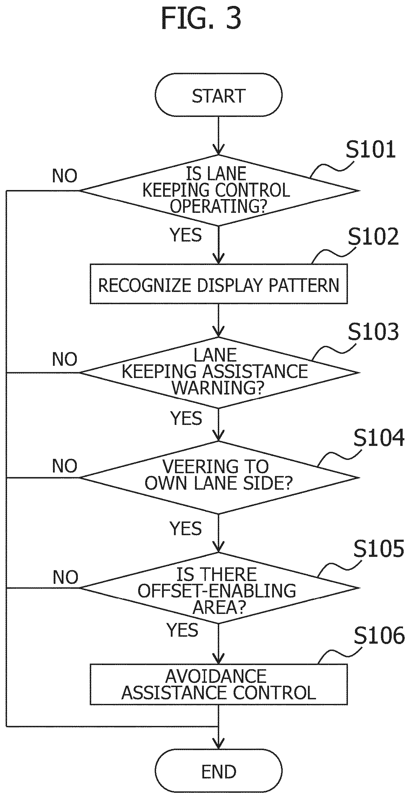

The avoidance assistance control in the present embodiment will be described in detail below using a flowchart of Figure 3. The flowchart of Figure 3 shows a flow of the avoidance assistance control executed while the lane keeping control is operating. The avoidance assistance unit 30B of the control device 30 repeatedly executes the process shown in Figure 3 at predetermined intervals while the lane keeping control by the lane keeping assistance unit 30A is operating.

At step S101, the avoidance assistance unit 30B determines whether or not the lane keeping control is being operated by the lane keeping assistance unit 30A. For example, when the LKAS function has been turned on by a switch operation by the driver, it is determined that the lane keeping control is operating, and the process proceeds to step S102. When the lane keeping control is not operating, this process is ended.

At step S102, the pattern recognition unit 34 recognizes the display pattern P projected on the road surface in front of the other vehicle 2 traveling on the adjacent lane L2, based on image data of the area in front of the vehicle 1 input from the camera 21. At step S103, it is determined whether or not the recognized display pattern P indicates the lane keeping assistance warning. When it is determined that the display pattern P indicates the lane keeping assistance warning, the process proceeds to step S104. When it is determined that the display pattern P does not indicate the lane keeping assistance warning, this process is ended.

At step S104, the veering determination unit 35 determines whether or not the other vehicle 2 traveling on the adjacent lane L2 veers to the lane L1. It is determined whether or not the recognized display pattern P indicating the lane keeping assistance warning is a pattern that warns of veering of the other vehicle 2 from the adjacent lane L2 into the lane L1 as shown in Figure 2. When the recognized display pattern P warns of veering of the other vehicle 2 from the adjacent lane L2 into the lane L1, the process proceeds to step S105. On the other hand, when the recognized display pattern P is not a pattern that warns of veering of the other vehicle 2 from the adjacent lane L2 into the lane L1, for example, when the recognized display pattern P warns of veering of the other vehicle 2 in a direction opposite to the lane L1, this process is ended.

At step S105, the avoidance assistance control unit 36 determines whether or not there is an offset-enabling area within the lane L1, based on image data of the area in front of the vehicle 1 input from the camera 21. When it is determined that the offset-enabling area is present, the process proceeds to step S106. When it is determined that the offset-enabling area is not present, this process is ended.

At step S106, the avoidance assistance control unit 36 sets an offset path obtained by offsetting the target path of the lane keeping control by the lane keeping assistance unit 30A in a direction away from the adjacent lane L2. The avoidance assistance control unit 36 calculates a steering angle command for following the offset path and outputs the steering angle command to the EPS controller 50. Thereby, as avoidance control for avoiding the other vehicle 2 that veers into the lane L1, steering control is executed such that the vehicle 1 travels, following the offset path. Furthermore, the avoidance assistance control unit 36 outputs a command to the display device 60 to display information showing that the avoidance assistance control is being executed.

In the control device for a vehicle according to the present embodiment described above, the following operation and advantages can be obtained.
(1) The control device 30 for the vehicle 1 includes: the pattern recognition unit 34 configured to recognize the display pattern P projected by the other vehicle 2, on a road surface of an area in front of the vehicle 1; the veering determination unit 35 configured to predict or determine that the other vehicle 2 veers from the adjacent lane (a second lane) L2 adjacent to the lane (a first lane) L1 in which the vehicle 1 is traveling, into the lane L1 based on the display pattern P recognized by the pattern recognition unit 34; and the avoidance assistance control unit 36 configured to, when it is predicted or determined by the veering determination unit 35 that the other vehicle 2 veers from the adjacent lane L2 to the lane L1, perform avoidance assistance control for avoiding collision with the other vehicle 2.
   It is difficult to accurately determine the driving operation state of the other vehicle 2 by the detection device such as the camera 21 equipped on the vehicle 1. Therefore, by making a configuration so as to predict or determine that the other vehicle 2 veers into the lane L1 by utilizing the display pattern P projected by the other vehicle 2 itself, it is possible to precisely determine the state of the other vehicle 2 in which the other vehicle 2 veering into the lane L1 and approaches the vehicle 1 to perform the avoidance assistance control for avoiding collision with the other vehicle 2. By using highly accurate information about veering of the other vehicle 2, it is possible to execute safer avoidance assistance control.
(2) The display pattern P is designed to, when the control device (an other-vehicle control device) 130 included in the other vehicle 2 predicts or determines veering of the other vehicle 2 from the adjacent lane L2, be projected on a road surface in front of the other vehicle 2 by the control device 130 of the other vehicle 2 as the lane keeping assistance warning of the driving assistance projection function. The pattern recognition unit 34 recognizes the display pattern P projected on the road surface of the adjacent lane L2 in front of the other vehicle 2. By utilizing the display pattern P specified as the vehicle keeping assistance warning of the driving assistance projection function, it is possible for the pattern recognition unit 34 of the vehicle 1 to easily determine whether or not the display pattern P is a pattern that indicates the vehicle keeping assistance warning. By using the display pattern P indicating the risk of veering of the other vehicle 2, which has been determined by the control device 130 of the other vehicle 2 based on information such as an amount of steering operation of the other vehicle itself, it is possible to precisely determine veering of the other vehicle 2 to the lane L1. Furthermore, since it is not necessary to provide a new device for detecting information such as the amount of steering operation of the other vehicle 2 in the vehicle 1, it is possible to avoid increase in the number of parts.
(3) The control device 30 includes the lane keeping assistance unit 30A configured to execute lane keeping control for performing steering control such that the vehicle 1 travels, following a target path within the lane L1. When it is predicted or determined by the veering determination unit 35 that the other vehicle 2 veers into the lane L1, the avoidance assistance control unit 36 offsets the target path set by the lane keeping assistance unit 30A in a direction away from the adjacent lane L2. Since the avoidance assistance control is executed by offsetting the target path set by the lane keeping assistance unit 30A, it is possible to construct a simple and safe control system utilizing the existing LKAS function equipped on the control device 30. Note that the lane keeping control by the lane keeping assistance unit 30A generally has an override function of, when an override operation is performed by the driver, transferring authority to the driver, giving priority to the override operation. The override function is also applicable to the avoidance assistance control. Thus, even in a case in which a target path is offset, if the driver manually performs a driving operation to perform an avoidance operation, priority can be given to the avoidance operation by the driver.
(4) The avoidance assistance control unit 36 determines whether or not there is an offset-enabling area within the lane L1, and if the offset-enabling area is present, offsets the target path within the lane L1. Thereby, it is possible to safely execute the avoidance assistance control as the vehicle 1 does not veer from the lane L1 even when the target path is offset.
(5) The veering determination unit 35 determines probability of veering of the other vehicle 2, based on the vehicle speed of the other vehicle 2 and the positional relationship of the other vehicle 2 relative to the demarcation line M0 between the lane L1 and the adjacent lane L2. The avoidance assistance control unit 36 delays timing of starting offset of the target path to be later as the probability of veering of the other vehicle 2 is lower. Even when veering of the other vehicle 2 is predicted by the veering determination unit 35, there is a possibility that the other vehicle 2 will avoid the veering by performing an avoidance operation. Therefore, when the display pattern P is projected by the other vehicle 2 as the lane keeping assistance warning of the driving assistance projection function, the probability of veering is determined by combining with information about the other vehicle 2 determined by the vehicle 1, and it is thereby possible to execute the avoidance assistance control according to the probability, that is, the certainty of veering of the other vehicle 2. By delaying start of the avoidance assistance control as the probability of veering is lower, it is possible to, when the other vehicle 2 avoids veering by performing an avoidance operation, prevent the vehicle 1 from executing unnecessary avoidance assistance control.

### Modifications

(1) In the embodiment described above, the avoidance assistance control unit 36 is configured to not set an offset path nor to perform the avoidance assistance control when there is no offset-enabling area within the lane L1. However, without being limited to this configuration, the avoidance assistance control unit 36 may be configured to execute brake control as the avoidance assistance control when there is no offset-enabling area. For example, the avoidance assistance control unit 36 outputs a deceleration command to a brake actuator (not shown) to cause autonomous emergency braking (AEB) to operate. By causing the autonomous emergency braking to operate, it is possible to avoid collision between the vehicle 1 and the other vehicle 2 or to reduce the damage at the time of collision with the other vehicle 2. Furthermore, the avoidance assistance control unit 36 may be configured to, when veering of the other vehicle 2 is predicted by the veering determination unit 35, combine and execute steering control and brake control according to the probability of the veering. For example, the avoidance assistance control unit 36 can be configured to execute the brake control and the steering control when the probability of veering of the other vehicle 2 is high, and the risk of collision between the other vehicle 2 and the vehicle 1 is high, and execute only the steering control when the probability of veering of the other vehicle 2 is low.
(2) In the embodiment described above, a configuration is made so as to, when the lane keeping control is being executed by the lane keeping assistance unit 30A, execute the avoidance assistance control by the avoidance assistance unit 30B. However, without being limited to this configuration, the avoidance assistance control by the avoidance assistance unit 30B may be executed when the lane keeping control by the lane keeping assistance unit 30A is not being executed. In this case, when veering of the other vehicle 2 is determined by the veering determination unit 35, the avoidance assistance control unit 36 sets a target position obtained by shifting the current position of the vehicle 1 in the vehicle width direction in a direction away from the adjacent lane within the lane L1, and calculates a steering angle command such that the vehicle 1 advances to the target position. Thereby, the steering control for avoiding the other vehicle 2 is executed independent from the lane keeping control. In this case, the lane keeping control unit 33 may be omitted. Note that it is also possible to apply the avoidance assistance control by the avoidance assistance unit 30B to an automated lane keeping system (ALKS), which is a combination of a lane keeping assistance system and an adaptive cruise control system (ACCS).
(3) In the embodiment described above, a configuration is made such that the control device 30 includes the lane keeping assistance unit 30A and the avoidance assistance unit 30B. However, without being limited to this configuration, the lane keeping assistance unit 30A and the avoidance assistance unit 30B may be configured as separate controllers.
(4) In the embodiment described above, a description has been made on a case in which the other vehicle 2 has the driving assistance projection function, and the vehicle 1 determines a display pattern of the driving assistance projection projected on a road surface by the other vehicle 2 to utilize the display pattern for the avoidance assistance control. However, without being limited to this configuration, the vehicle 1 may also be configured to have the driving assistance projection function. In this case, it is possible to configure a driving assistance system including a plurality of vehicles each of which has the driving assistance projection function and is capable of executing the avoidance assistance control.

Embodiments of the present invention have been described above. The present invention, however, is not limited to the above embodiments, and various kinds of modifications and changes are further possible within the scope of the present invention.

### [Reference Signs List]

- 1: Vehicle
- 2: Other vehicle
- 21: Camera
- 30: Control device
- 30A: Lane keeping assistance unit
- 31: Lane recognition unit
- 32: Target steering angle calculation unit
- 33: Lane keeping control unit
- 30B: Avoidance assistance unit
- 34: Pattern recognition unit
- 35: Veering determination unit
- 36: Avoidance assistance control unit
- 50: EPS controller
- 51: Steering mechanism
- 130: Other-vehicle control device

## Claims

1. A control device for a vehicle, the control device comprising:
a pattern recognition unit configured to recognize a display pattern projected by another vehicle, on a road surface of an area in front of the vehicle;
a veering determination unit configured to predict or determine that the other vehicle veers from a second lane adjacent to a first lane in which the vehicle is traveling, to the first lane based on the display pattern recognized by the pattern recognition unit; and
an avoidance assistance control unit configured to, when it is predicted or determined by the veering determination unit that the other vehicle veers from the second lane to the first lane, perform avoidance assistance control for avoiding collision with the other vehicle.

2. The control device for the vehicle according to claim 1, wherein:
the display pattern is designed to, when an other-vehicle control device in the other vehicle predicts or determines veering of the other vehicle from the second lane, be projected on a road surface in front of the other vehicle by the other-vehicle control device as a lane keeping assistance warning of a driving assistance projection function; and
the pattern recognition unit recognizes the display pattern projected on the road surface of the second lane in front of the other vehicle.

3. The control device for the vehicle according to claim 1 or 2, comprising a lane keeping assistance unit configured to execute lane keeping control for performing steering control such that the vehicle travels, following a target path within the first lane, wherein
when it is predicted or determined by the veering determination unit that the other vehicle veers to the first lane, the avoidance assistance control unit offsets the target path set by the lane keeping assistance unit in a direction away from the second lane.

4. The control device for the vehicle according to claim 3, wherein
the avoidance assistance control unit determines whether or not there is an offset-enabling area within the first lane, and if the offset-enabling area is present, offsets the target path within the first lane.

5. The control device for the vehicle according to claim 3 or 4, wherein:
the veering determination unit determines probability of veering of the other vehicle, based on a vehicle speed of the other vehicle and a positional relationship of the other vehicle relative to a demarcation line between the first lane and the second lane; and
the avoidance assistance control unit delays timing of starting offset of the target path later as the probability of veering of the other vehicle is lower.
